# EUROPÄISCHE PATENTANMELDUNG

(11) **EP 0 716 268 A2**
(43) Veröffentlichungstag der Anmeldung: **12.06.1996**
(21) Anmeldenummer: 95810721.1
(22) Anmeldetag: 17.11.1995
(51) Int. Cl.: F23R 3/00

(54) **Gekühltes Wandteil**

(30) Priorität: 09.12.1994 DE 4443864
(71) Anmelder: ABB Management AG, CH-5401 Baden (CH)
(72) Erfinder: Althaus, Rolf, Dr., Higashinada-ku, Kobe 658 (JP)

(57) **Zusammenfassung**

Bei einem gekühlten Wandteil mit einer Mehrzahl nahe der Innenwand (1) und parallel zu dieser verlaufender separater konvektiv gekühlter Längskühlkanäle (2), wobei benachbarte Längskühlkanäle (2) jeweils über Zwischenrippen (3) miteinander verbunden sind, ist am stromab gelegenen Ende der Längskühlkanäle (2) eine Umlenkeinrichtung (4) vorgesehen, welche mit mindestens einem nahe der Aussenwand (5) im Wandteil angeordneten Rückströmkühlkanal (6) verbunden ist, von dem eine Mehrzahl zur Innenwand (1) des gekühlten Wandteils verlaufenden und in den Zwischenrippen (3) angeordneten Röhrchen (7) abzweigt. Mit diesem Wandteil kann das Kühlmedium mehrfach zur Kühlung (Konvektiv-, Effusions-, Filmkühlung) verwendet werden.

## Beschreibung

### Technisches Gebiet

Die Erfindung betrifft ein gekühltes Wandteil, beispielsweise ein Wandteil von umströmten heissen Turbomaschinen-Komponenten wie Brennkammerwandungen.

### Stand der Technik

Es ist bekannt, zur Kühlung von Brennkammerwänden zwecks Vermeidung zu hoher Materialtemperaturen konvektive Kühlungsverfahren anzuwenden, bei denen das Kühlmedium im Gleichstrom- oder Gegenstromprinzip zur Brennkammerströmung in einem sich zwischen Brennkammerinnen- und Brennkammeraussenwand befindenden Kühlkanal, der ein Ringspalt sein kann, oder in voneinander abgegrenzten separaten Kühlkanälen entlangströmt und dabei Wärme aufnimmt. Diese konvektiven Kühlungsverfahren können beispielsweise mit Prallkühlungen zur Erzeugung hoher Wärmeübergangszahlen kombiniert werden (DE 28 36 539 C2).

Ausserdem sind zur Kühlung von Brennkammerwänden Kühltechniken bekannt, die auf einer kontrollierten Einbringung von Luft in die Verbrennungszone basieren. Das trifft beispielsweise auf die Filmkühlung zu, bei der das Kühlmedium durch Öffnungen in der Brennkammerinnenwand in das Innere der Brennkammer gelangt, an der Innenseite der Brennkammerwand entlangströmt und dort einen dünnen Film bildet, welcher eine thermische Isolationsschicht darstellt und die Wärmebelastung der Wand verringert.

Diese bekannten Kühlungstechniken werden den ständig steigenden Anforderungen an den Wirkungsgrad von Gasturbinenanlagen, den damit verbundenen extrem hohen Temperaturen und dem möglichst geringen Kühlluftverbrauch kaum mehr gerecht.

### Darstellung der Erfindung

Die Erfindung versucht, diese Nachteile zu vermeiden. Ihr liegt die Aufgabe zugrunde, ein gekühltes Wandteil zu entwikkeln, bei dem das Kühlmedium intern mehrfach zur Kühlung verwendet wird und dadurch eine erhöhte Kühleffektivität erzielt wird.

Erfindungsgemäss wird dies bei einem gekühlten Wandteil mit einer Mehrzahl nahe der Innenwand und parallel zu dieser verlaufender separater konvektiv gekühlter Längskühlkanäle, wobei benachbarte Längskühlkanäle jeweils über Zwischenrippen miteinander verbunden sind, dadurch erreicht, dass am stromab gelegenen Ende der Längskühlkanäle eine Umlenkeinrichtung vorgesehen ist, welche mit mindestens einem nahe der Aussenwand im Wandteil angeordneten Rückströmkühlkanal verbunden ist, von dem eine Mehrzahl zur Innenwand des gekühlten Wandteils verlaufenden und in den Zwischenrippen angeordneten Röhrchen abzweigt.

Die Vorteile der Erfindung bestehen darin, dass das Kühlmedium, beispielsweise Kühlluft, mehrfach verwendet wird, nämlich einmal zur konvektiven Kühlung in den Längskühlkanälen, dann zur konvektiven Kühlung in den quer verlaufenden Röhrchen, wobei letztere Kühlung eine Effusionskühlung (Durchgang von Gasen durch kleine Öffnungen) darstellt und schliesslich zur Filmkühlung der Innenwand des gekühlten Wandteils.

Es ist besonders zweckmässig, wenn die Röhrchen unter einem rechten Winkel zur Strömungsrichtung im Rückströmkühlkanal angeordnet sind.

Ferner kann es vorteilhaft sein, wenn die Röhrchen unter einem vom rechten Winkel abweichenden Winkel, beispielsweise einem spitzen Winkel zur Strömungsrichtung im Rückströmkühlkanal in den Zwischenrippen angeordnet sind.

Weiterhin ist es von Vorteil, wenn das Wandteil ein Brennkammerkühlziegel ist und die Innenwand des gekühlten Wandteiles von der Brennkammerströmung umströmt ist.

### Kurze Beschreibung der Zeichnung

In der Zeichnung ist Ausführungsbeispiele der Erfindung dargestellt.

Es zeigen:
- Fig. 1: eine perspektivische Darstellung eines erfindungsgemässen gekühlten Wandteiles;
- Fig. 2: einen Teillängsschnitt von Fig. 1 in der Ebene II-II;
- Fig. 3: einen Teillängsschnitt von Fig. 1 in der Ebene III-III;
- Fig. 4: einen Teilquerschnitt einer weiteren Ausführungsform;
- Fig. 5a: einen Teillängsschnitt einer Brennkammer einschliesslich Brennkammerwand in der Ebene der Effusionskühlung;
- Fig. 5b: einen Teillängsschnitt einer Brennkammer einschliesslich Brennkammerwand in der Ebene der Konvektivkühlung.

Es sind nur die für das Verständnis der Erfindung wesentlichen Elemente gezeigt. Die Strömungsrichtung der Medien ist mit Pfeilen bezeichnet.

### Weg zur Ausführung der Erfindung

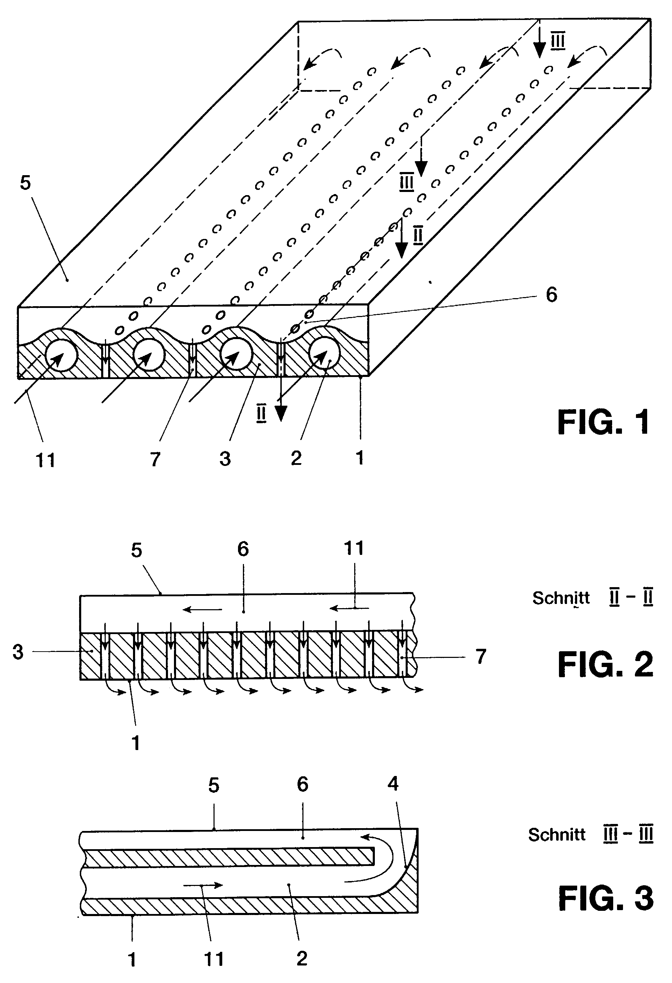

Nachfolgend wird die Erfindung anhand von Ausführungsbeispielen und der Fig. 1 bis 5 näher erläutert.

Fig. 1 zeigt in perspektivischer Darstellung ein gekühltes Wandteil, bei dem nahe der Innenwand 1 mehrere parallel zur Innenwand 1 verlaufende Längskühlkanäle 2 angeordnet sind. Diese Längskühlkanäle 2 sind über Zwischenrippen 3 miteinander verbunden. Am stromab gelegenen Ende der Kühlkanäle 2 ist jeweils eine Umlenkeinrichtung 4, beispielsweise ein gebogenes Blech angeordnet, über welches die Längskühlkanäle 2 jeweils mit Rückströmkühlkanälen 6 verbunden sind. Die Rückströmkühlkanäle 6 sind nahe der Aussenwand 5 des gekühlten Wandteiles angeordnet und werden an ihrer Unterseite von den Zwischenrippen 3 begrenzt. In der Mitte der Zwischenrippen 3 sind im rechten Winkel zur Innenwand 1 in jedem Rückströmkühlkanal 6 eine Vielzahl kleiner Röhrchen 7 angeordnet, welche eine Querverbindung des Rückströmkanales 6 mit der Innenwand 1 schaffen.

In den Fig. 2 und 3 sind Teillängsschnitte von Fig. 1 dargestellt. Fig. 2 ist ein Teillängsschnitt in der Ebene einer Zwischenwand 3 und der Röhrchen 7, während Fig. 3 ein Teillängsschnitt in der Ebene eines Längskühlkanales 2 ist.

Anhand dieser Figuren lässt sich das Kühlverfahren gut erklären. Gemäss Fig. 3 gelangt das Kühlmedium 11, beispielsweise Luft oder Dampf, zunächst in den Längskühlkanal 2 und kühlt dort konvektiv die Innenwand 1 des Wandteiles. Am stromab gelegenen Ende des Kühlkanales 2 wird die Strömung des Kühlmediums 11 durch die Umlenkeinrichtung 4 um 180° umgelenkt und es gelangt nun im Gegenstromprinzip in den Rückströmkühlkanal 6. Gemäss Fig. 2 zweigen vom Rückströmkühlkanal 6 im rechten Winkel zur Innenwand 1 des gekühlten Wandteiles eine Vielzahl von Röhrchen 7 ab, welche durch die Zwischenwand 3 zwischen den Längskühlkanälen 2 verlaufen. Das Kühlmedium 11 strömt nunmehr vom Rückströmkanal 6 aus durch diese kleinen, dicht aneinandergereihten Röhrchen 7 und kühlt so konvektiv die Zwischenwand 3. Man kann hier von einer Effusionskühlung sprechen, da das gasförmige Medium durch eine Vielzahl kleiner Öffnungen strömt. An der Innenwand 1 des gekühlten Wandteiles bildet das Kühlmedium 11 sodann eine dünne thermische Isolationsschicht, welche die Wärmebelastung der Wand verringert.

Durch die mehrfache interne Verwendung des Kühlmediums infolge Kombination verschiedener Kühltechniken (Konvektivkühlung, Effusionskühlung, Filmkühlung) zur Kühlung eines thermisch belasteten Wandteiles wird die Effektivität der Kühlung wesentlich erhöht.

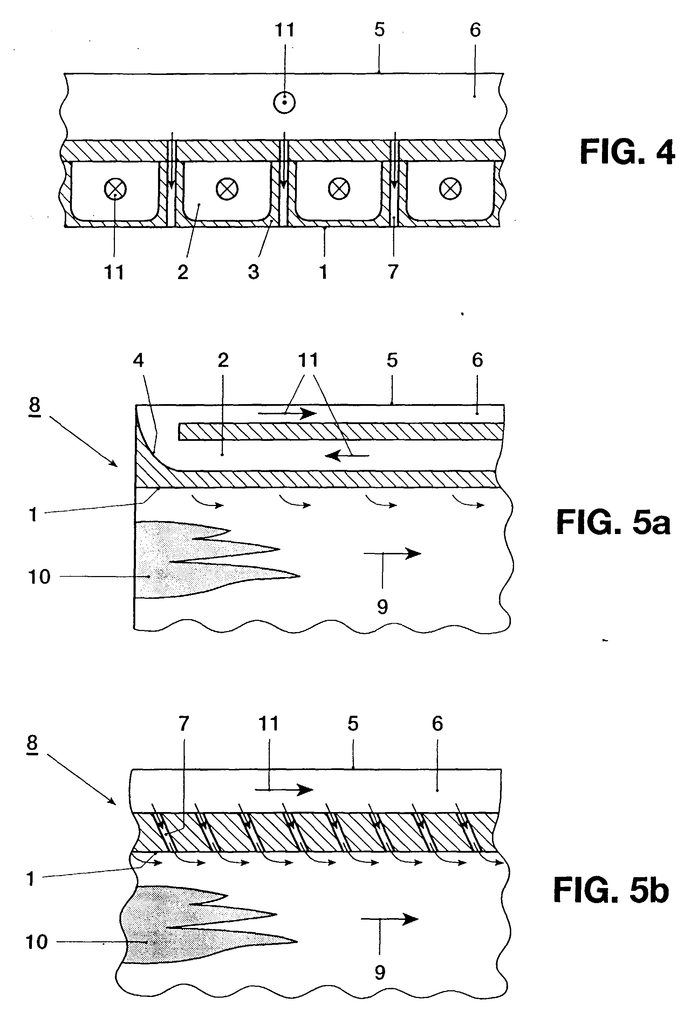

Selbstverständlich ist die Erfindung nicht auf das o.g. Ausführungsbeispiel beschränkt. Fig. 4 zeigt z.B. einen Teilquerschnitt eines gekühlten Wandteiles, bei dem nicht mehrere Rückströmkühlkanäle, sondern nur ein Rückströmkühlkanal 6 in Form eines Ringspaltes vorhanden ist.

In Fig. 5 sind Teillängsschnitte einer Gasturbinenbrennkammer dargestellt, wobei Fig. 5a einen Schnitt in der Ebene eines Längskühlkanales und Fig. 5b einen Schnitt in der Ebene der Zwischenwand 3 und der Röhrchen 7 zeigen.

Das erfindungsgemässe gekühlte Wandteil stellt bei diesem Ausführungsbeispiel einen Brennkammerkühlziegel 8 dar. Die Brennkammerwand 1 wird zunächst im Gegenstromprizip konvektiv gekühlt, indem die Kühlluft 11 im Längskühlkanal 2 in entgegengesetzter Richtung zur Brennkammerströmung 9 entlangströmt. Selbstverständlich ist es auch möglich, eine konvektive Kühlung im Gleichstromprinzip vorzusehen.

Am Ende des Kühlkanales 2 sorgt eine Umlenkeinrichtung 4 dafür, dass die Kühlluft eine Richtungsänderung erfährt. Sie strömt, um 180° umgelenkt, in den Rückströmkanal 6 ein. Gemäss Fig. 5b tritt die Kühlluft 11 nunmehr in die in den Zwischenwänden 3 verlaufenden Röhrchen 7 ein. Diese Röhrchen 7 sind über die ganze Länge der Kühlkanäle 2 verteilt und bewirken, dass die Zwischenwände 3 mit geringen Luftverbrauch gekühlt werden.

Die Röhrchen 7 sind in diesem Ausführungsbeispiel nicht in einem rechten Winkel zur Innenwand 1 angeordnet, sondern sie bilden mit der Strömungsrichtung im Rückströmkanal 6 einen spitzen Winkel, so dass die Kühlluft 11 schräg zur Strömungsrichtung der Brennkammerströmung 9 in den Innenraum der Brennkammer einströmt. Auf diese Weise erfährt die sich an der Innenwand 1 bildende Filmkühlungs-Isolationsschicht eine stärkere Haftung als z.B. bei einer rechtwinkligen Einströmung der Kühlluft in den Brennkammerinnenraum. Die Schrägstellung der Röhrchen richtet sich dabei nach der Stärke der strömungsbedingten Ablöseerscheinung der Kühlluft-Filmbildung.

Die Brennkammerinnenwand wird somit bei geringen Luftverbrauch hervorragend gekühlt, wobei die thermische Isolationsschicht die Wärmebelastung der Wand wesentlich verringert. Ausserdem erfolgt ein großmächtiges Einbringen mit guter Einmischung der zu Kühlzwecken eingesetzten Luft in die Brennkammerströmung 9. Bei einer Vormischverbrennung hätte die Isolationsschicht weiterhin den Vorteil, dass die Vormisch-Flamme 10 nicht in der Strömungsgrenzschicht an der Wand stromauf bis zum Ort der Brennstoffeindüsung wandert, wo sie diffusionsartig verbrennen würde.

### Bezugszeichenliste

1 Innenwand
2 Längskühlkanal
3 Zwischenwände
4 Umlenkeinrichtung
5 Aussenwand
6 Rückströmkanal
7 Röhrchen
8 Brennkamerkühlziegel
9 Brennkammerströmung
10 Flamme
11 Kühlmedium

## Patentansprüche

1. Gekühltes Wandteil mit einer Mehrzahl nahe der Innenwand (1) und parallel zu dieser verlaufender separater konvektiv gekühlter Längskühlkanäle (2), wobei benachbarte Längskühlkanäle (2) jeweils über Zwischenrippen (3) miteinander verbunden sind, dadurch gekennzeichnet, dass am stromab gelegenen Ende der Längskühlkanäle (2) eine Umlenkeinrichtung (4) vorgesehen ist, welche mit mindestens einem nahe der Aussenwand (5) im Wandteil angeordneten Rückströmkühlkanal (6) verbunden ist, von dem eine Mehrzahl zur Innenwand (1) des gekühlten Wandteils verlaufenden und in den Zwischenrippen (3) angeordneten Röhrchen (7) abzweigt.

2. Gekühltes Wandteil nach Anspruch 1, dadurch gekennzeichnet, dass die Röhrchen (7) im rechten Winkel zur Strömungsrichtung im Rückströmkühlkanal (6) angeordnet sind.

3. Gekühltes Wandteil nach Anspruch 1, dadurch gekennzeichnet, dass die Röhrchen (7) unter einem spitzen Winkel zur Strömungsrichtung im Rückströmkühlkanal (6) angeordnet sind.

4. Gekühltes Wandteil nach Anspruch 1, dadurch gekennzeichnet, dass das Wandteil ein Brennkammerkühlziegel (8) ist und die Innenwand (1) des gekühlten Wandteiles von der Brennkammerströmung (9) umströmt ist.
